(19) Europäisches Patentamt
European Patent Office
Office européen des brevets

(11) Veröffentlichungsnummer: **0 392 358 B1**

(12) **EUROPÄISCHE PATENTSCHRIFT**

(45) Veröffentlichungstag der Patentschrift: **01.12.93**

(51) Int. Cl.[5]: **C09B 67/22**, C09B 29/033, //D06P3/52,D06P1/18

(21) Anmeldenummer: **90106523.5**

(22) Anmeldetag: **05.04.90**

# (54) Marineblaue und schwarze Farbstoffmischungen.

(30) Priorität: **12.04.89 DE 3911950**

(43) Veröffentlichungstag der Anmeldung:
**17.10.90 Patentblatt 90/42**

(45) Bekanntmachung des Hinweises auf die Patenterteilung:
**01.12.93 Patentblatt 93/48**

(84) Benannte Vertragsstaaten:
**CH DE FR GB IT LI**

(56) Entgegenhaltungen:
**EP-A- 0 166 566**
**EP-A- 0 201 896**
**EP-A- 0 311 910**
**US-A- 4 472 169**

(73) Patentinhaber: **BASF Aktiengesellschaft**
**Carl-Bosch-Strasse 38**
**D-67063 Ludwigshafen(DE)**

(72) Erfinder: **Hahn, Erwin, Dr.**
**Am Buechsenackerhang 31**
**D-6900 Heidelberg(DE)**
Erfinder: **Hansen, Guenter, Dr.**
**Alwin-Mittasch-Platz 8**
**D-6700 Ludwigshafen(DE)**
Erfinder: **Etzbach, Karl-Heinz, Dr.**
**Carl-Bosch-Ring 55**
**D-6710 Frankenthal(DE)**
Erfinder: **Reichelt, Helmut, Dr.**
**Johann-Gottlieb-Fichte Strasse 56**
**D-6730 Neustadt(DE)**
Erfinder: **Shefczik, Ernst, Dr.**
**Dubliner Strasse 7**
**D-6700 Ludwigshafen(DE)**
Erfinder: **Degen, Helmut**
**Wildstrasse 32**
**D-6710 Frankenthal(DE)**
Erfinder: **Krallmann, Reinhold**
**Bachweg 2**
**D-6719 Weisenheim(DE)**
Erfinder: **Wagenblast, Gerhard, Dr.**
**Hanns-Fay-Strasse 3**
**D-6710 Frankenthal(DE)**
Erfinder: **Lamm, Gunther, Dr.**
**Heinrich-Heine-Strasse 7**
**D-6733 Hassloch(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 392 358 B1

**Beschreibung**

Die vorliegende Erfindung betrifft neue marineblaue und schwarze Farbstoffmischungen, enthaltend einen oder mehrere Farbstoffe F1, deren Absorptionsmaximum bei einer Wellenlänge von 521 bis 580 nm liegt, sowie einen oder mehrere Farbstoffe F2, deren Absorptionsmaximum bei einer Wellenlänge von 581 bis 640 nm liegt, wobei mindestens einer der Farbstoffe F1 oder F2 die Formel I

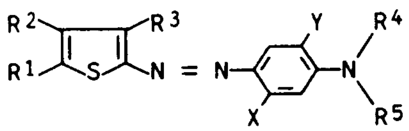

(I)

aufweist, in der

| | |
|---|---|
| $R^1$ | Formyl, Cyano oder Phenylsulfonyl, |
| $R^2$ | Halogen, $C_1$-$C_8$-Alkoxy, gegebenenfalls substituiertes Phenoxy, $C_1$-$C_6$-Alkylthio,Phenylthio, $C_1$-$C_4$-Alkylsulfonyl oder Phenylsulfonyl, |
| $R^3$ | Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl, |
| $R^4$ und $R^5$ | gleich oder verschieden sind und unabhängig voneinander jeweils $C_1$-$C_8$-Alkyl, das gegebenenfalls durch ein oder mehrere Sauerstoffatome unterbrochen und durch Hydroxy, Cyano, Chlor, Phenyl, gegebenenfalls durch Chlor, Hydroxy, $C_1$-$C_4$-Alkoxy oder Phenoxy substituiertes $C_1$-$C_6$-Alkanyloxy, gegebenenfalls durch Chlor, Hydroxy, $C_1$-$C_4$-Alkoxy oder Phenoxy substituiertes $C_1$-$C_6$-Alkoxycarbonyl, gegebenenfalls durch Chlor, Hydroxy, $C_1$-$C_4$-Alkoxy oder Phenoxy substituiertes $C_1$-$C_6$-Alkoxycarbonyloxy oder gegebenenfalls durch Chlor, Hydroxy, $C_1$-$C_6$-Alkoxy oder Phenoxy substutiertes $C_1$-$C_6$-Mono- oder Dialkylaminocarbonyloxy substituiert sein kann, oder $R^4$ auch Wasserstoff, |
| X | Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und |
| Y | Wasserstoff, $C_1$-$C_4$-Alkyl oder $C_1$-$C_4$-Alkoxy bedeuten, |

und wobei die Differenz Δ zwischen den Absorptionsmaxima der Farbstoffe F2 und F1 20 bis 100 nm beträgt.

Die obengenannten Absorptionswerte (in nm) beziehen sich auf Messungen mit Methylenchlorid als Lösungsmittel.

Ähnliche Farbstoffmischungen sind in der älteren Anmeldung EP-A-311 910 beschrieben.

Die in den neuen Mischungen enthaltenen Thiophenazofarbstoffe der Formel I sind an sich bekannt und z.B. in der EP-A-201 896 beschrieben. Sie ergeben auf Polyester Ausfärbungen in brillanten violetten bis blaugrünen Farbtönen.

Aufgabe der vorliegenden Erfindung war es, Farbstoffmischungen bereitzustellen, die auf Polyester Ausfärbungen in marineblauen bis schwarzen Farbtönen ergeben.

Demgemäß wurden die eingangs näher bezeichneten Farbstoffmischungen gefunden, wobei überraschend war, daß man durch Mischen der oben aufgeführten Farbstoffe marineblaue und schwarze Farbtöne erreichen kann.

Alle in der obengenannten Formel I auftretenden Alkylgruppen können sowohl geradkettig als auch verzweigt sein.

Wenn in der Formel I substituierte Phenylgruppen auftreten, kommen als Substituenten, sofern nicht anders vermerkt, z.B. $C_1$-$C_4$-Alkyl, $C_1$-$C_4$-Alkoxy oder Halogen in Betracht.

Wenn in der Formel I Alkylreste auftreten, die durch ein oder mehrere Sauerstoffatome unterbrochen sind, sind solche Reste bevorzugt, die durch ein oder zwei Sauerstoffatome unterbrochen sind.

Wenn in Formel I substituierte Alkylgruppen auftreten, so können diese ein- oder zweifach substituiert sein, wobei die Substituenten gleich oder verschieden sind.

$R^2$, X und Y in Formel I bedeuten beispielsweise Methoxy, Ethoxy, Propoxy, Isopropoxy, Butoxy, Isobutoxy oder sec-Butoxy.

$R^2$ bedeutet weiterhin z.B. Pentyloxy, Isopentyloxy, Neopentyloxy, tert-Pentyloxy, Hexyloxy, Heptyloxy, Octyloxy, 2-Ethylhexyloxy, Fluor, Chlor, Brom, Phenoxy, 2-Chlorphenoxy, 4-Chlorphenoxy, 4-Methylphenoxy, 4-Methoxyphenoxy, Methylthio, Ethylthio, Propylthio, Isopropylthio, Butylthio, Isobutylthio, Pentylthio,

Isopentylthio, Hexylthio, Methylsulfonyl, Ethylsulfonyl, Propylsulfonyl, Isopropylsulfonyl oder Butylsulfonyl.

X und Y bedeuten weiterhin, ebenso wie $R^4$ und $R^5$ z.B. Methyl, Ethyl, Propyl, Isopropyl, Butyl, Isobutyl, sec-Butyl oder tert-Butyl.

$R^3$ bedeutet z.B. Methoxycarbonyl, Ethoxycarbonyl, Propoxycarbonyl, Isopropoxycarbonyl, Butoxycarbonyl, Isobutoxycarbonyl, sec-Sutoxycarbonyl, Pentyloxycarbonyl, Isopentyloxycarbonyl, Neopentyloxycarbonyl, tert-Pentyloxycarbonyl, Hexyloxycarbonyl, 2-Methoxyethoxycarbonyl, 2-Ethoxyethoxycarbonyl, 2-Propoxyethoxycarbonyl, 2-Butoxyethoxycarbonyl, 2- oder 3-Methoxypropoxycarbonyl, 2- oder 3-Ethoxypropoxycarbonyl, 3,6-Dioxaheptyloxycarbonyl, 3,6-Dioxaoctyloxycarbonyl, Methylcarbamoyl, Ethylcarbamoyl, Propylcarbamoyl, Isopropylcarbamoyl, Butylcarbamoyl, Dimethylcarbamoyl, Diethylcarbamoyl, Dipropylcarbamoyl, Dibutylcarbamoyl oder N-Methyl-N-ethylcarbamoyl.

$R^4$ und $R^5$ bedeuten weiterhin z.B. Pentyl, Isopentyl, Neopentyl, tert-Pentyl, Hexyl, Heptyl, Octyl, 2-Ethylhexyl, 2-Hydroxyethyl, 2- oder 3-Hydroxypropyl, 2- oder 4-Hydroxybutyl, 5-Hydroxypentyl, 6-Hydroxyhexyl, 7-Hydroxyheptyl, 8-Hydroxyoctyl, 2-Chlorethyl, 2- oder 3-Chlorpropyl, 2-oder 4-Chlorbutyl, 2-Cyanoethyl, 2- oder 3-Cyanopropyl, 2- oder 4-Cyanobutyl, Benzyl, 1- oder 2-Phenylethyl, 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 4-Methoxybutyl, 2- oder 4-Ethoxybutyl, 3,6-Dioxaheptyl, 3,6-Dioxaoctyl, 2-Formyloxyethyl, 2-Acetyloxyethyl, 2-Propionyloxyethyl, 2-Butyryloxyethyl, 2-Pentanoyloxyethyl, 2-Hexanoyloxyethyl, 4-Acetyloxybutyl, 2-Methoxycarbonyloxyethyl, 2-Mono-oder Diethylaminocarbonyloxyethyl, 2-Mono- oder Diethylaminocarbonyloxyethyl, 2-Mono oder Dipropylaminocarbonyloxyethyl, 2-Mono- oder Dibutylaminocarbonyloxyethyl, 2-Methoxycarbonylethyl, 2-Ethoxycarbonylethyl, 2-Propoxycarbonylethyl, 2-Isopropoxycarbonylethyl, 2-Butoxycarbonylethyl, 2-Pentyloxycarbonylethyl, 2-Hexyloxycarbonylethyl, 2-(Chloracetyloxy)ethyl, 2-(Hydroxyacetyloxy)-ethyl, 2-(Methoxyacetyloxy)ethyl, 2-(Ethoxyacetyloxy)ethyl, 2-(Phenoxyacetyloxy)ethyl, 2-(Chlorethoxycarbonyloxy)ethyl, 2-(Hydroxyethoycarbonyloxy)ethyl, 2-(Methoxyethoxycarbonyloxy)ethyl, 2-(Ethoxyethoxycarbonyloxy)ethyl, 2-(Phenoxyethoxycarbonyloxy)ethyl, 2-[Mono-oder Bis(2-chlorethyl)-aminocarbonyloxy]ethyl, 2-[Mono- oder Bis(2-hydroxyethyl)aminocarbonyloxy]ethyl, 2-[Mono- oder Bis(2-methoxyethyl)aminocarbonyloxy]ethyl oder 2-[Mono- oder Bis(2-phenoxyethyl)aminocarbonyloxy]ethyl.

Wenn X für den Rest NH-CO-$R^6$ steht, bedeutet $R^6$ beispielsweise Methyl, Ethyl, Propyl, Isopropyl, Butyl, Methoxymethyl, Ethoxymethyl, 1- oder 2-Methoxyethyl, 1- oder 2-Ethoxyethyl, Phenoxymethyl, 1- oder 2-Phenoxyethyl, Cyanomethyl, 2-Cyanoethyl, 3-Cyanopropyl, 4-Cyanobutyl, Hydroxymethyl, 1- oder 2-Hydroxyethyl, 2- oder 3-Hydroxypropyl, 4-Hydroxybutyl, Chlormethyl, 2-Chlorethyl, Formyloxymethyl, Acetyloxymethyl, 2-Formyloxyethyl, 2-Acetyloxyethyl, 2-Propionyloxyethyl, 2-Butyryloxyethyl, 3-Formyloxypropyl, 4-Acetyloxybutyl, Phenoxy, 2-Methoxyphenoxy, 4-Methoxyphenoxy, 4-Ethoxyphenoxy oder 4-Isopropoxyphenoxy.

In den erfindungsgemäßen Farbstoffmischungen muß mindestens einer der Farbstoffe F1 oder F2 die obengenannten Formel I aufweisen, d.h. es ist auch möglich, daß beide Farbstoffe F1 und F2 der Formel I gehorchen.

Farbstoffe F1 und F2, die neben den Farbstoffen der Formel I, Bestandteil der erfindungsgemäßen Mischungen sein können, stammen beispielsweise aus der Reihe der nitrogruppenfreien Monoazofarbstoffe, wobei solche, die sich von heterocyclischen Diazo- und/oder Kupplungskomponenten ableiten, bevorzugt sind.

Geeignete Diazokomponenten leiten sich z.B. aus der Klasse der Aminothiophene, Aminoisothiazole oder Aminothiadiazole ab. Geeignete Kupplungskomponenten stammen beispielsweise aus der Klasse der Aniline, Thiazole oder Diaminopyridine.

Insbesondere entsprechen solche Farbstoffe der Formel II, III, IV, V, VI oder VII

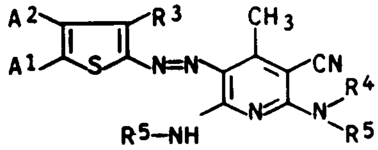

(II)

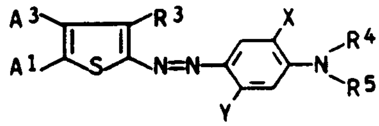

(III)

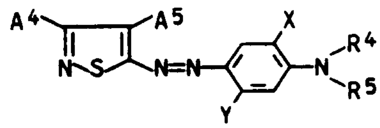

(IV)

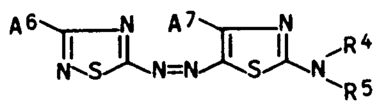

(V)

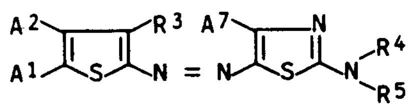

(VI)

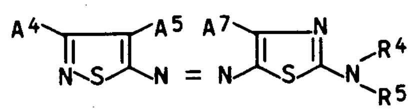

(VII)

wobei

| | |
|---|---|
| $R^3$, $R^4$, $R^5$, X und Y | jeweils die obengenannte Bedeutung besitzen und |
| $A^1$ | für Formyl, Cyano oder $C_1$- $C_4$-Alkoxycarbonyl, |
| $A^2$ | für Wasserstoff, Methyl, gegebenenfalls durch Chlor, Methyl, Methoxy oder Ethoxy substituiertes Phenyl oder den obengenannten Rest $R^2$, |
| $A^3$ | für Wasserstoff, Methyl oder gegebenenfalls durch Chlor, Methyl, Methoxy oder Ethoxy substituiertes Phenyl, |
| $A^4$ | für gegebenenfalls durch $C_1$-$C_4$-Alkoxy substituiertes $C_1$-$C_4$-Alkyl, gegebenenfalls durch $C_1$-$C_4$-Alkoxy substituiertes Benzyl, gegebenenfalls durch Chlor, Methyl, Methoxy oder Ethoxy substituiertes Phenyl, Pyrid-2-yl oder Pyrid-3-yl, |
| $A^5$ | für Cyano, Chlor oder Brom, |
| $A^6$ | für gegebenenfalls durch $C_1$-$C_4$-Alkoxy, Chlor oder Cyano substituiertes $C_1$-$C_6$-Alkyl, gegebenenfalls durch $C_1$-$C_4$-Alkoxy, Chlor oder Cyano substituiertes Phenyl, gegebenenfalls durch Cyano oder $C_1$-$C_4$-Alkoxycarbonyl substituiertes $C_1$-$C_6$-Alkylthio oder gegebenenfalls durch Cyano oder $C_1$-$C_4$-Alkoxycarbonyl substituiertes Phenylthio und |
| $A^7$ | für gegebenenfalls durch $C_1$-$C_4$-Alkoxy oder Acetylamino substituiertes Thienyl oder Pyridyl stehen. |

Bevorzugt sind Farbstoffmischungen, in denen die Farbstoffe F1 und F2 der Formel I gehorchen.

Weiterhin bevorzugt sind Farbstoffmischungen, enthaltend Farbstoffe der Formel I und der Formel II.

Weiterhin bevorzugt sind Farbstoffmischungen, enthaltend Farbstoffe der Formel I und der Formel III.

Weiterhin bevorzugt sind Farbstoffmischungen, enthaltend Farbstoffe der Formel I und der Formel IV.

Weiterhin bevorzugt sind Farbstoffmischungen, enthaltend einen oder mehrere Farbstoffe der Formel I, in der $R^1$ Formyl, $R^2$ Chlor und $R^3$ Cyano oder $C_1$-$C_4$-Alkoxycarbonyl bedeuten.

In den erfindungsgemäßen Farbstoffmischungen beträgt die Differenz Δ zwischen den Absorptionsmaxima der Farbstoffe F2 und F1 20 bis 100 nm, vorzugsweise 40 bis 90 nm.

Es sind solche Farbstoffmischungen bevorzugt, in denen das Gewichtsverhältnis der Farbstoffe F1 und F2 1 : 1 bis 1 : 99, insbesondere 1 : 3 bis 1 : 20 beträgt.

Wie bereits oben ausgeführt, muß von den in den erfindungsgemäßen Farbstoffmischungen enthaltenen Farbstoffen F1 und F2 mindestens einer der Formel I gehorchen. Dabei spielt es keine Rolle, ob dies ein Farbstoff aus der Klasse F1 oder F2 ist.

Bei den Farbstoffen F1 und F2 handelt es sich im allgemeinen um bekannte Farbstoffe. Farbstoffe der Formel I und II sind z.B. in der EP-A-201 896 oder der älteren deutschen Patentanmeldung P 39 02 005.3 beschrieben. Nähere Angaben zu den Farbstoffe der Formel III finden sich beispielsweise in der EP-A-197 471 sowie der GB-A-1 583 377. Aus der EP-A-87 616, EP-A-87 677, EP-A-121 875, EP-A-151 287 sowie der älteren Anmeldung EP-A-335 234 sind Farbstoffe der Formel IV bekannt. Die ältere deutsche Patentanmeldung P 38 33 443.7 beschreibt Farbstoffe vom Typ der Formel V und VII. Aus der älteren deutschen Patentanmeldung P 38 33 442.9 sind schließlich Farbstoffe der Formel VI bekannt.

Die Herstellung der erfindungsgemäßen Farbstoffmischungen erfolgt durch Mischen der jeweiligen Partner im genannten Gewichtsverhältnis. Gegebenenfalls können den neuen Mischungen weitere Komponenten, z.B. Dispergiermittel, zugesetzt werden. Es ist auch möglich, bereits fertige Farbstoffpräparationen der jeweiligen Partner abzumischen.

Die neuen marineblauen und schwarzen Farbstoffmischungen eignen sich zum Färben und Bedrucken von Polyestergeweben. Man erhält dabei Ausfärbungen und Drucke in marineblauen bis schwarzen Tönen, die sich durch eine hohe Lichtechtheit auszeichnen.

Die Färbe- und Druckverfahren sind an sich bekannt. Nähere Einzelheiten können auch den Beispielen entnommen werden.

Ein weiterer Vorteil der erfindungsgemäßen Farbstoffmischungen liegt in ihrer arbeitsplatzhygienischen Unbedenklichkeit.

Die folgenden Beispiele sollen die Erfindung näher erläutern.

Färbevorschrift

10 g Polyestergewebe werden bei einer Temperatur von 60 °C in 200 ml einer Färbeflotte gegeben, die Z Gew.% Farbstoffmischung, bezogen auf das Polyestergewebe, enthält und deren pH-Wert mittels Essigsäure auf 4,5 eingestellt ist. Man behandelt 5 Minuten bei 60 °C, steigert dann die Temperatur der Flotte innerhalb von 30 Minuten auf 135 °C, hält 60 Minuten bei dieser Temperatur und läßt dann innerhalb von 20 Minuten auf 60 °C abkühlen.

Danach wird das ausgefärbte Polyestergewebe reduktiv gereinigt, indem man es 15 Minuten in 200 ml einer Flotte, die 5 ml/l 32 gew.%ige Natronlauge, 3 g/l Natriumdithionit und 1 g/l eines Anlagerungsproduktes von 48 ml Ethylenoxid an 1 Mol Ricinusöl enthält, bei 65 °C behandelt. Schließlich wird das Gewebe gespült, mit verdünnter Essigsäure neutralisiert, nochmals gespült und getrocknet.

Die in der folgenden Tabelle aufgeführten Farbstoffmengen gelten jeweils für die Tiefe der Marineblaustufe 1.

| Bestandteile der Mischung [g] | Mischung Nr. 1 | 2 | 3 | 4 | 5 | 6 | 7 |
|---|---|---|---|---|---|---|---|
| 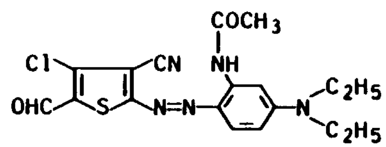 | 40,1 | - | - | - | - | 41 | 43 |
| 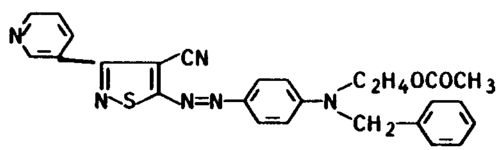 | 9,9 | - | - | - | - | - | - |
| 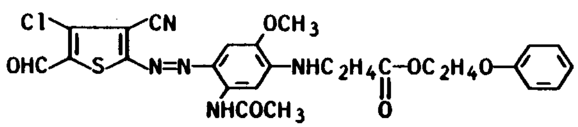 | - | 33,1 | - | - | 32,7 | - | - |
| 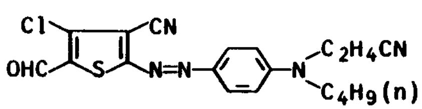 | - | 6,9 | 6,9 | - | - | - | - |

| Bestandteile der Mischung [g] | Mischung Nr. 1 | 2 | 3 | 4 | 5 | 6 | 7 |
|---|---|---|---|---|---|---|---|
| 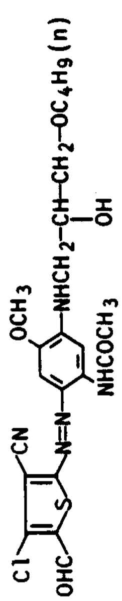 | - | - | 33,1 | 32,7 | - | - | - |
| 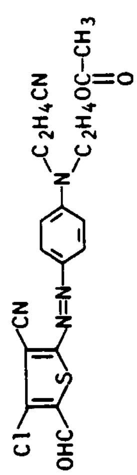 | - | - | - | 7,3 | 7,3 | - | - |
| 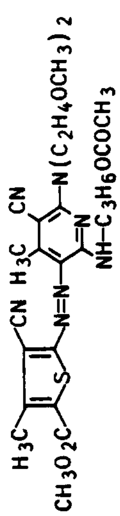 | - | - | - | - | - | - | 7 |
| 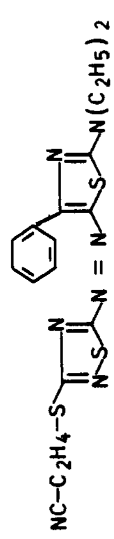 | - | - | - | - | - | 9 | - |
| Dispergiermittel auf Basis Ligninsulfonat | 50 | 60 | 60 | 60 | 60 | 50 | 50 |
| Verwendete Menge Z der Mischung [Gew.%, bezogen auf Polyestergewebe] | 2,5 | 3,75 | 3,75 | 3,75 | 3,75 | 3,0 | 3,0 |

## Patentansprüche

1. Marineblaue und schwarze Farbstoffmischungen, enthaltend einen oder mehrere Farbstoffe F1, deren Absorptionsmaximum bei einer Wellenlänge von 521 bis 580 nm liegt, sowie einen oder mehrere

Farbstoffe F2, deren Absorptionsmaximum bei einer Wellenlänge von 581 bis 640 nm liegt, wobei mindestens einer der Farbstoffe F1 oder F2 die Formel I

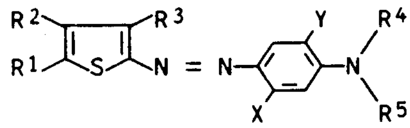

(I)

aufweist, in der

$R^1$ Formyl, Cyano oder Phenylsulfonyl,

$R^2$ Halogen, $C_1$-$C_8$-Alkoxy, gegebenenfalls substituiertes Phenoxy, $C_1$-$C_6$-Alkylthio, Phenylthio, $C_1$-$C_4$-Alkylsulfonyl oder Phenylsulfonyl,

$R^3$ Cyano, $C_1$-$C_6$-Alkoxycarbonyl, dessen Alkylkette gegebenenfalls durch ein oder mehrere Sauerstoffatome unterbrochen ist, Carbamoyl oder $C_1$-$C_4$-Mono- oder Dialkylcarbamoyl,

$R^4$ und $R^5$ gleich oder verschieden sind und unabhängig voneinander jeweils $C_1$-$C_8$-Alkyl, das gegebenenfalls durch ein oder mehrere Sauerstoffatome unterbrochen und durch Hydroxy, Cyano, Chlor, Phenyl, gegebenenfalls durch Chlor, Hydroxy, $C_1$-$C_4$-Alkoxy oder Phenoxy substituiertes $C_1$-$C_6$-Alkanoyloxy, gegebenenfalls durch Chlor, Hydroxy, $C_1$-$C_4$-Alkoxy oder Phenoxy substituiertes $C_1$-$C_6$-Alkoxycarbonyl, gegebenenfalls durch Chlor, Hydroxy, $C_1$-$C_4$-Alkoxy oder Phenoxy substituiertes $C_1$-$C_6$-Alkoxycarbonyloxy oder gegebenenfalls durch Chlor, Hydroxy, $C_1$-$C_4$-Alkoxy oder Phenoxy substituiertes $C_1$-$C_6$-Mono- oder Dialkylaminocarbonyloxy substituiert sein kann, oder $R^4$ auch Wasserstoff,

X Wasserstoff, $C_1$-$C_4$-Alkyl, $C_1$-$C_4$-Alkoxy, Chlor, Brom oder den Rest -NH-CO-$R^6$, wobei $R^6$ für $C_1$-$C_4$-Alkyl, das durch $C_1$-$C_4$-Alkoxy, Phenoxy, Cyano, Hydroxy, Chlor oder $C_1$-$C_4$-Alkanoyloxy substituiert sein kann, oder für gegebenenfalls durch $C_1$-$C_4$-Alkoxy substituiertes Phenoxy steht, und

Y Wasserstoff, $C_1$-$C_4$-Alkyl oder $C_1$-$C_4$-Alkoxy bedeuten,

und wobei die Differenz Δ zwischen den Absorptionsmaxima der Farbstoffe F2 und F1 20 bis 100 nm beträgt.

**2.** Farbstoffmischungen gemäß Anspruch 1, dadurch gekennzeichnet, daß $R^1$ Formyl, $R^2$ Chlor und $R^3$ Cyano oder $C_1$-$C_4$-Alkoxycarbonyl bedeuten.

**3.** Farbstoffmischungen gemäß Anspruch 1, dadurch gekennzeichnet, daß die Differenz Δ zwischen den Absorptionsmaxima der Farbstoffe F2 und F1 40 bis 90 nm beträgt.

## Claims

**1.** A navy or black dye mixture comprising one or more dyes F1 whose absorption maximum is at a wavelength of from 521 to 580 nm and one or more dyes F2 whose absorption maximum is at a wavelength of from 581 to 640 nm, at least one of the dyes F1 or F2 having the formula I

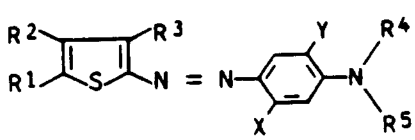

(I)

where

$R^1$ is formyl, cyano or phenylsulfonyl,

$R^2$ is halogen, $C_1$-$C_8$-alkoxy, substituted or unsubstituted phenoxy, $C_1$-$C_6$-alkylthio, phenylthio, $C_1$-$C_4$-alkylsulfonyl or phenylsulfonyl,

$R^3$ is cyano, $C_1$-$C_6$-alkoxycarbonyl, whose alkyl chain may be interrupted by one or more oxygen atoms, carbamoyl or $C_1$-$C_4$-monoalkyl- or -dialkyl-carbamoyl,

$R^4$ and $R^5$ are identical or different and each is independently of the other $C_1$-$C_8$-alkyl which may be interrupted by one or more oxygen atoms and substituted by hydroxyl, cyano, chlorine, phenyl, unsubstituted or chlorine-, hydroxyl-, $C_1$-$C_4$-alkoxy- or phenoxy-substituted $C_1$-$C_6$-alkanoyloxy, unsubstituted or chlorine-, hydroxyl-, $C_1$-$C_4$-alkoxy- or phenoxy-substituted $C_1$-$C_6$-alkoxycarbonyl, unsubstituted or chlorine-, hydroxyl-, $C_1$-$C_4$-alkoxy- or phenoxy-substituted $C_1$-$C_6$-alkoxycarbonyloxy or unsubstituted or chlorine-, hydroxyl-, $C_1$-$C_4$-alkoxy- or phenoxy-substituted $C_1$-$C_6$-monoalkyl- or -dialkyl-amino-carbonyloxy, or else $R^4$ is hydrogen,

X is hydrogen, $C_1$-$C_4$-alkyl, $C_1$-$C_4$-alkoxy, chlorine, bromine or the radical -NH-CO-$R^6$, where $R^6$ is $C_1$-$C_4$-alkyl which may be substituted by $C_1$-$C_4$-alkoxy, phenoxy, cyano, hydroxyl, chlorine or $C_1$-$C_4$-alkanoyloxy or is unsubstituted or $C_1$-$C_4$-alkoxy-substituted phenoxy, and

Y is hydrogen, $C_1$-$C_4$-alkyl or $C_1$-$C_4$-alkoxy,

the difference Δ between the absorption maxima of the dyes F2 and F1 being from 20 to 100 nm.

**2.** A dye mixture as claimed in claim 1, wherein $R^1$ is formyl, $R^2$ is chlorine and $R^3$ is cyano or $C_1$-$C_4$-alkoxycarbonyl.

**3.** A dye mixture as claimed in claim 1, wherein the difference Δ between the absorption maxima of the dyes F2 and F1 is from 40 to 90 nm.

## Revendications

**1.** Mélanges de colorants bleu marine et noirs, contenant un ou plusieurs colorants F1 dont le maximum d'absorption se situe à une longueur d'onde de 521 à 580 nm, ainsi qu'un ou plusieurs colorants F2 dont le maximum d'absorption se situe à une longueur d'onde de 581 à 640 nm, l'un au moins des colorants F1 ou F2 répondant à la formule

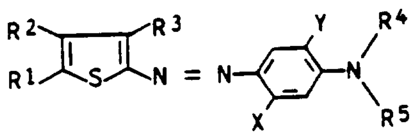

(I)

dans laquelle

$R^1$ représente un reste formyle, cyano ou phénylsulfonyle

$R^2$ représente un atome d'halogène ou un reste alcoxy en $C_1$-$C_8$, phénoxy éventuellement substitué, alkylthio en $C_1$-$C_6$, phénylthio, alkylsulfonyle en $C_1$-$C_4$ ou phénylsulfonyle,

$R^3$ représente un reste cyano, (alcoxy en $C_1$-$C_6$)carbonyle dont la chaîne alkyle est éventuellement interrompue par un ou plusieurs atomes d'oxygène, carbamoyle ou mono- ou di(alkyl en $C_1$-$C_4$)carbamoyle,

$R^4$ et $R^5$ sont identiques ou différents et représentent chacun, indépendamment l'un de l'autre, un reste alkyle en $C_1$-$C_8$ qui peut être éventuellement interrompu par un ou plusieurs atomes d'oxygène et substitué par un groupement hydroxy, cyano, un atome de chlore, un groupement phényle, alcanoyloxy en $C_1$-$C_6$ (éventuellement substitué par un atome de chlore ou un reste hydroxy, alcoxy en $C_1$-$C_4$ ou phénoxy), (alcoxy en $C_1$-$C_6$)-carbonyle (éventuellement substitué par un atome de chlore ou un radical hydroxy, alcoxy en $C_1$-$C_4$ ou phénoxy), (alcoxy en $C_1$-$C_6$)carbonyloxy (éventuellement substitué par un atome de chlore ou un reste hydroxy, alcoxy en $C_1$-$C_4$ ou phénoxy) ou mono- ou di(alkyl en $C_1$-$C_6$)aminocarbonyloxy (éventuellement substitué par un atome de chlore ou par un groupement hydroxy, alcoxy en $C_1$-$C_4$ ou phénoxy), ou $R^4$ peut aussi représenter un atome d'hydrogène,

X représente un atome d'hydrogène, un reste alkyle en $C_1$-$C_4$, alcoxy en $C_1$-$C_4$, un atome de chlore, de brome ou le reste -NH-CO-$R^6$, $R^6$ étant mis pour un radical alkyle en $C_1$-$C_4$, qui peut être substitué par un groupement alcoxy en $C_1$-$C_4$, phénoxy, cyano, hydroxy, un atome de chlore ou un groupement alcanoyloxy en $C_1$-$C_4$, ou pour un radical phénoxy éventuellement substitué par un groupement alcoxy en $C_1$-$C_4$,

Y représente un atome d'hydrogène, un reste alkyle en $C_1$-$C_4$ ou alcoxy en $C_1$-$C_4$,
la différence Δ entre les maximums d'absorption des colorants F2 et F1 étant comprise entre 20 et 100 nm.

2. Mélanges de colorants selon la revendication 1, caractérisés en ce que $R^1$ représente un reste formyle, $R^2$ un atome de chlore et $R^3$ un reste cyano ou (alcoxy en $C_1$-$C_4$)carbonyle.

3. Mélanges de colorants selon la revendication 1, caractérisés en ce que la différence Δ entre les maximums d'absorption des colorants F2 et F1 est comprise entre 40 et 90 nm.